# EUROPEAN PATENT SPECIFICATION

(11) **EP 3 937 046 B1**
(45) Date of publication and mention of the grant of the patent: **13.12.2023**
(21) Application number: 21182249.9
(22) Date of filing: 29.06.2021
(51) Int. Cl.: G06F 21/57, G06F 21/64

(54) **TRUSTED STARTUP METHODS AND APPARATUSES OF BLOCKCHAIN INTEGRATED STATION**
VERTRAUENSWÜRDIGE START-METHODEN UND -GERÄTE FÜR INTEGRIERTE BLOCKCHAIN-STATION
MÉTHODES ET APPAREILS DE DÉMARRAGE DE CONFIANCE DE STATION INTÉGRÉE BLOCKCHAIN

(30) Priority: 08.07.2020 CN 202010652921
(43) Date of publication of application: 12.01.2022
(73) Proprietor: Alipay (Hangzhou) Information Technology Co., Ltd., Hangzhou, Zhejiang 310000 (CN)
(72) Inventor: Wei, Changzheng, Hangzhou, Zhejiang (CN); Wu, Peng, Hangzhou, Zhejiang (CN); Yan, Ying, Hangzhou, Zhejiang (CN); Zhang, Hui, Hangzhou, Zhejiang (CN); He, Changhua, Hangzhou, Zhejiang (CN); Wang, Lei, Hangzhou, Zhejiang (CN)
(74) Representative: Goddar, Heinz J.

(56) References cited:
- US-A1- 2014 215 196
- US-A1- 2016 070 934
- US-A1- 2019 340 379

## Description

### TECHNICAL FIELD

One or more embodiments of the present disclosure relates to the field of blockchain technologies, and in particular to trusted startup methods and apparatuses of a blockchain integrated station.

### BACKGROUND

Blockchain technology (also called distributed ledger technology) is a decentralized distributed database technology having many characteristics such as decentralization, openness, transparency, tamper-resistance, and trustworthiness and the like, and thus it is applicable to many application scenarios with high demands for data reliability.

US 2014/215196 A1 discloses an approach for boot driver verification. A secure hash calculation engine intercepts a pre-boot driver before the pre-boot driver is executed and computes a secure hash. If the computed secure hash is successfully verified, the pre-boot driver is executed. If the computed secure hash is not successfully verified, the pre-boot driver is prevented from executing.

US 2019/340379 A1 discloses an approach for immutable bootloader and firmware validator. A processor of an embedded computing device accesses immutable executable code stored in ROM of the embedded computing device and executes instructions of the retrieved code, a network-layer address of a tamper-evident, immutable data repository and an application-layer address of firmware of the embedded computing device stored in the repository. The processor of an embedded computing device further executes instructions of the immutable executable code that download the firmware of the embedded computing device from the repository and that store the downloaded firmware in re-writeable memory of the embedded computing device.

### SUMMARY

The invention is defined by a method, an apparatus, devices, and a storage medium according to the independent claims. Preferred embodiments are defined in the dependent claims.

In view of this, one or more embodiments of the present disclosure provide trusted startup methods and apparatuses of a blockchain integrated station.

To achieve the above-mentioned object, one or more embodiments of the present disclosure provide the following technical solution:

According to a first aspect of one or more embodiments of the present disclosure, provided is a trusted startup method of a blockchain integrated station, including:
computing, by the blockchain integrated station, a current hash value of a locally-deployed disk image in response to receiving a startup instruction;
providing, by the blockchain integrated station, the current hash value to a cryptographic acceleration card assembled on the blockchain integrated station, and receiving a comparison result between the current hash value and a pre-stored standard hash value returned by the cryptographic acceleration card, wherein the standard hash value corresponds to a pre-defined standard disk image; and
in response to that the comparison result indicates that the current hash value is identical to the standard hash value, executing, by the blockchain integrated station, the locally-deployed disk image to form a blockchain node.

According to a second aspect of one or more embodiments of the present disclosure, provided is a trusted startup method of a blockchain integrated station, including:
receiving, by a cryptographic acceleration card assembled on the blockchain integrated station, a current hash value sent from the blockchain integrated station, wherein the current hash value is obtained by the blockchain integrated station by computing a locally-deployed disk image in response to receiving a startup instruction; the cryptographic acceleration card pre-stores a standard hash value corresponding to a pre-defined standard disk image; and
comparing, by the cryptographic acceleration card, the current hash value and the standard hash value, and returning a comparison result to the blockchain integrated station, such that the blockchain integrated station executes the locally-deployed disk image to form a blockchain node in response to that the comparison result indicates that the current hash value is identical to the standard hash value.

According to a third aspect of one or more embodiments of the present disclosure, provided is a trusted startup apparatus of a blockchain integrated station, including:
an instruction receiving module, configured to enable the blockchain integrated station to compute a current hash value of a locally-deployed disk image in response to receiving a startup instruction;
a hash providing module, configured to enable the blockchain integrated station to provide the current hash value to a cryptographic acceleration card assembled on the blockchain integrated station, and receive a comparison result between the current hash value and a pre-stored standard hash value returned by the cryptographic acceleration card, wherein the standard hash value corresponds to a predefined standard disk image; and
a disk image executing module, configured to enable the blockchain integrated station to execute the locally-deployed disk image to form a blockchain node in response to that the comparison result indicates that the current hash value is identical to the standard hash value.

According to a fourth aspect of one or more embodiments of the present disclosure, provided is a trusted startup apparatus of a blockchain integrated station, including:
a hash receiving module, configured to enable a cryptographic acceleration card assembled on the blockchain integrated station to receive a current hash value sent from the blockchain integrated station, wherein the current hash value is obtained by the blockchain integrated station by computing a locally-deployed disk image in response to receiving a startup instruction; and the cryptographic acceleration card pre-stores a standard hash value corresponding to a pre-defined standard disk image; and
a hash comparing module, configured to enable the cryptographic acceleration card to compare the current hash value and the standard hash value and return a comparison result to the blockchain integrated station, such that the blockchain integrated station executes the locally-deployed disk image to form a blockchain node in response to that the comparison result indicates that the current hash value is identical to the standard hash value.

According to a fifth aspect of one or more embodiments of the present disclosure, provided is a blockchain integrated station, including:
a processor;
a memory for storing instructions executable by the processor;
where the processor implements the method according to the first aspect by running the executable instructions.

According to a sixth aspect of one or more embodiments of the present disclosure, provided is a cryptographic acceleration card, including:
a processor;
a memory for storing instructions executable by the processor;
where the processor implements the method according to the second aspect by running the executable instructions.

According to a seventh aspect of one or more embodiments of the present disclosure, provided is a computer readable storage medium for storing computer instructions thereon, where the instructions are executed by a processor to implement steps of the method according to the first or second aspect.

### BRIEF DESCRIPTION OF THE DRAWINGS

FIG. 1 is a flowchart of a trusted startup method of a blockchain integrated station according to example embodiments of the present disclosure.
FIG. 2 is a flowchart of another trusted startup method of a blockchain integrated station according to example embodiments of the present disclosure.
FIG. 3 is an interaction flowchart of a trusted startup method of a blockchain integrated station according to example embodiments of the present disclosure.
FIG. 4 is a structural schematic diagram of a blockchain integrated station according to example embodiments of the present disclosure.
FIG. 5 is a block diagram of a trusted startup apparatus of a blockchain integrated station according to example embodiments of the present disclosure.
FIG. 6 is a structural schematic diagram of a cryptographic acceleration card according to example embodiments of the present disclosure.
FIG. 7 is a block diagram of another trusted startup apparatus of a blockchain integrated station according to example embodiments of the present disclosure.

### DETAILED DESCRIPTION OF THE EMBODIMENTS

Example embodiments will be described in detail herein with the example embodiments thereof expressed in the drawings. When the following descriptions involve the drawings, same numbers in different drawings represent same or similar elements unless stated otherwise. The implementations described in the following example embodiments do not represent all implementations consistent with one or more embodiments of the present disclosure. On the contrary, they are merely embodiments of apparatuses and methods consistent with some aspects of one or more embodiments of the present disclosure described in detail in the appended claims.

It should be noted that the steps of corresponding method are not necessarily performed according to the sequence shown in the present disclosure in other embodiments. In some other embodiments, the steps included in the corresponding method can be more or less than described in the specification. Further, a single step described in the specification can be divided into several steps for descriptions in other embodiments while several steps described in the specification can be combined into a single step for descriptions in other embodiments.

In the early stage of development of the blockchain technology, users mostly add their own personal computer (PC) and laptop computer and the like into a blockchain network to become a blockchain node in the blockchain network. At this time, the stage can be called 1.0 architecture era of blockchain network, in which the behaviors of users to participate in the blockchain network are autonomous and the users also need to perform autonomous maintenance, for example, perform maintenance and configuration and so on for their devices (for example, PC) participating in the blockchain network. Along with continuous development of the blockchain technology, especially along with increasing needs of users for infrastructures with high performance and high availability, the blockchain network develops into 2.0 architecture era based on cloud service. In the 2.0 architecture era, Blockchain-as-a-Service (BaaS) provides fast and convenient solutions for fast blockchain deployment and technical implementation and supports a large number of blockchain service projects. Generally, BaaS is built on infrastructures such as public cloud or private cloud, which introduces heavy dependence on infrastructure as well as providing strong deployment capability. However, because blockchain is a typical distributed computing technology, not all nodes can be migrated to clouds but privatization deployment is needed. The additional technical migration and maintenance costs brought by the privatization deployment cause inconsistent technical interfaces and high deployment and maintenance costs during an actual implementation. Therefore, to satisfy the needs of users for privatization and security and the like of the blockchain network, it is necessary to perform further architecture upgrade to the blockchain network, thereby realizing 3.0 architecture era based on blockchain integrated station.

Software and hardware integration can be realized for the blockchain integrated station. When providing a blockchain integrated station, a provider will not only provide hardware devices of the blockchain integrated station to users but also provide software configurations for realizing deep optimizations of the hardware devices integrated into the blockchain integrated station, thereby realizing the above-mentioned software-hardware integration.

Hardware optimization can be realized for the blockchain integrated station. For example, a dedicated smart contract processing chip can be deployed on the blockchain integrated station. For example, the smart contract processing chip can be Field Programmable Gate Array (FPGA) chip, or another type of chip to increase the processing efficiency for a smart contract. A hardware root-of-trust key can be deployed on the smart contract processing chip, for example, the hardware root-of-trust key can be pre-programmed by the provider into the smart contract processing chip and the provider can also know a public key corresponding to the hardware root-of-trust key (for example, the key is disclosed). Therefore, the smart contract processing chip can send negotiation information to the provider and sign the negotiation information by using the hardware root-of-trust key, so that the provider can verify the signature based on the corresponding public key; and, after successful signature verification, it is ensured that the smart contract processing chip and the provider obtain the same key through negotiation based on the above-mentioned negotiation information. The negotiated key can include an image deployment key, and thus the provider can encrypt and transmit a binary disk image needed by the blockchain node to the smart contract processing chip based on the image deployment key, and the smart contract processing chip can decrypt and deploy the binary disk image based on the image deployment key. The negotiated key can include a service secret deployment key, and thus the provider can encrypt and transmit a node private key of the blockchain node, a service root key of the blockchain node, etc., to the smart contract processing chip based on the service secret deployment key, and the smart contract processing chip can acquire and deploy the node private key and the service root key and the like based on the service secret deployment key to satisfy the privacy transaction needs in a blockchain scenario. For example, the node private key corresponds to a node public key, and thus a client device can encrypt and transmit a blockchain transaction by using the node public key, and the blockchain node can perform decryption by using the node private key. The service root key is a symmetric key which can be used to perform encrypted storage for service data such as contract codes and value of contract status and the like. The service root key may not be directly used, and the smart contract processing chip can perform encryption and decryption through a derivation key of the service root key to reduce the security risk of the service root key. Through reliable management for the node private key and the service root key (or its derivation key), data will be always in encrypted state unless processed by the smart contract processing chip. Therefore, the smart contract processing chip actually forms a Trusted Execution Environment (TEE) of hardware on the blockchain integrated station, so as to ensure the data requiring privacy protection such as transactions, contract codes, and contract status will not be leaked.

For another example, a smart network card can be deployed on the blockchain integrated station. In addition to realizing a traditional network card function, the smart network card also can replace or assist a CPU of the blockchain integrated station to perform partial functions so as to offload computation of the CPU. Especially, the operations with intensive network I/O can be transferred from CPU to the smart network card to perform, so that the CPU can process more computation-intensive operations, for example, transaction processing, and storage processing and the like. Compared with other components (for example, CPU) on the blockchain integrated station, the smart network card is closer to the network regardless of physical level or logical level, so the smart network card can always fetch data transmitted in the network preferentially. Therefore, with no storage access or a small amount of storage access is involved, the smart network card can process these data with a relatively higher processing efficiency and a relatively smaller delay, and a relatively larger throughput, so as to achieve a higher performance benefit with a lower cost. For example, in consensus algorithm, there is almost no need to access storage except in the cases of change of network status, addition and deletion of node, change of consensus configuration and the like. Therefore, the consensus operation can be completed by the smart network card and only need to inform the CPU of a consensus result. Therefore, the CPU is not required to directly participate in the consensus process, thereby significantly improving the consensus efficiency. Similarly, the same effect can be achieved in forwarding transactions by the smart network card and achieving block synchronization by the smart network card on a newly-added blockchain node and the like and will not be repeated herein. Furthermore, after receiving transactions, the smart network card can identify or filter out a replay transaction by comparing the received transaction with historical transactions, for example, comparing data fields of sender information of transaction, destination address, time stamp, and hash value and the like. The smart network card can also perform content analysis for those received transactions, so as to filter out illegal transactions or predefined undesired transactions and the like as a supplementation to layer-2 or layer-3 packet filtering implemented by a switch.

For another example, a cryptographic acceleration card which is also called a high-speed cryptographic acceleration card can be deployed on the blockchain integrated station. The cryptographic acceleration card can realize total encrypted memory, defend against side-channel attacks by hardware reinforcement, and also realize physical protection against approaches such as probe, laser and the like, having very high security. For example, the cryptographic acceleration card used on the blockchain integrated station can have level-2 qualification from the State Cryptography Administration, level-3 qualification from the State Cryptography Administration and the like. When the cryptographic acceleration card is deployed, the hardware roof-of-trust key as described above-mentioned can be maintained in the cryptographic acceleration card, and the cryptographic acceleration card can perform signature operation based on the hardware roof-of-trust key and replace or assist the smart contract processing chip to complete the operations such as the key negotiation as described above-mentioned. Similarly, the cryptographic acceleration card can be used to maintain a public key so that the cryptographic acceleration card can realize signature verification operation based on the maintained public key. In short, at least part of operations relating to key management, encryption and decryption, and signature verification and the like on the blockchain integrated station can be handed over to the cryptographic acceleration card, so that very high security can be realized and task offloading can be realized for the CPU of the blockchain integrated station or the above-mentioned smart contract processing chip, thereby improving the processing efficiency.

Software optimization can be realized for the blockchain integrated station. For example, a certificate authority service can be built in the blockchain integrated station to realize automatic certificate issuing, node identity authentication, automatic blockchain construction, and automatic adding of blockchain node, thereby realizing the plug and play of the blockchain integrated station. In this case, a user can realize fast deployment of the blockchain integrated station. In addition to quickly establishing a private blockchain network among a plurality of blockchain integrated stations, the blockchain integrated station can integrate a standardized on-cloud service interface to enable the blockchain integrated station to automatically connect to on-cloud service, thereby realizing hybrid deployment between the blockchain integrated station and the cloud-deployed blockchain node to construct a hybrid blockchain network. The blockchain integrated station can also integrate a standardized cross-chain service interface to enable the blockchain integrated station to realize cross-chain services based on a standardized cross-chain protocol or standardized cross-chain service, thereby greatly expanding the application scenarios of the blockchain integrated station, and satisfying the cross-chain needs of users. For example, cross-chain data interaction between different blockchain networks is achieved, and for another example, cross-chain data interaction between the blockchain network and an off-chain computing node and the like is achieved (for example, the off-chain computing node shares computation task for the blockchain node and the like).

Based on a unified software logic, the blockchain integrated station in the present disclosure can realize a trusted startup process for a disk image deployed on itself. In this process, the blockchain integrated station firstly determines whether the disk image satisfies a startup condition that a current value of the disk image is identical to a pre-stored standard hash value after receiving a startup instruction, and then executes the disk image in response to satisfying the startup condition, thereby realizing trusted startup of the disk image in the kiosk. The process will be described below in combination with accompanying drawings.

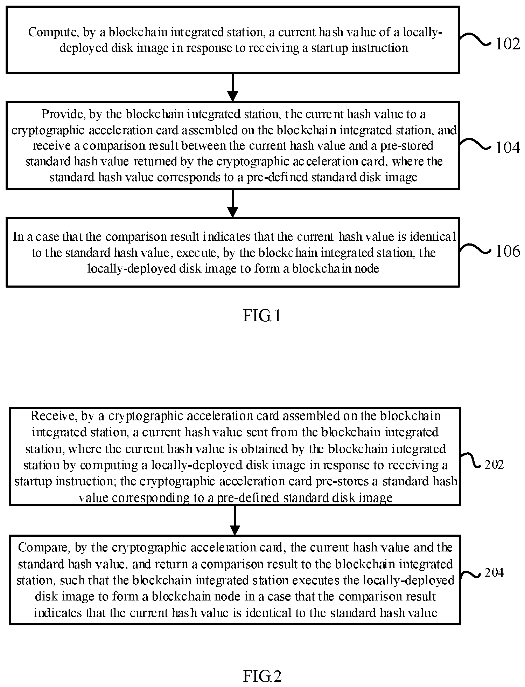

FIG. 1 is a flowchart of a trusted startup method of a blockchain integrated station according to example embodiments of the present disclosure. The method is applied to a blockchain integrated station. In order to distinguish from a cryptographic acceleration card assembled in the blockchain integrated station, the executing subject of the method, i.e. the blockchain integrated station can be understood as a CPU of the blockchain integrated station, or another component other than the cryptographic acceleration card assembled in the blockchain integrated station. As shown in FIG. 1, the method can include the following steps.

At step 102, the blockchain integrated station computes a current hash value of a locally-deployed disk image in response to receiving a startup instruction.

In this embodiment, a disk image (that has not been executed yet) is locally pre-deployed on the blockchain integrated station. The specific form of the disk image is not limited herein in the present disclosure. For example, the disk image can be an executable disk image, for example, an executable file of .exe format. At this time, the executable file can be pre-installed in an execution component of the blockchain integrated station, such as a hard disk drive. The disk image can also be a binary disk image, for example, a binary file of .bin format. At this time, the binary file can be pre-stored at a proper position of an execution component of the blockchain integrated station, such as a hard disk drive to be invoked and executed. Further, the disk image can be a binary disk image corresponding to a blockchain node and deployed on the blockchain integrated station. Correspondingly, when the binary disk image is executed, the blockchain integrated station is implemented as a blockchain node, for example, realize one or more functions of blockchain visualization, contract creation and deployment, contract execution, key management and privacy computing and the like. The disk image can also be a platform disk image including the above-mentioned binary disk image corresponding to the blockchain node and deployed on the blockchain integrated station. When the platform disk image is executed, the blockchain integrated station is implemented not only as a blockchain node, but also can realize one or more other functions such as file processing, node monitoring and service monitoring, which will not be redundantly described herein.

In an embodiment, the above-mentioned startup instruction can be in several forms which are not limited herein. For example, the above-mentioned startup instruction can be a machine startup instruction sent when a user (for example, a user of the blockchain integrated station) performs a machine startup operation for the blockchain integrated station; or a file execution instruction sent by a management device for the above-mentioned binary disk image in the blockchain integrated station under the startup state of the blockchain integrated station or the like.

At step 104, the blockchain integrated station provides the current hash value to a cryptographic acceleration card assembled on the blockchain integrated station, and receives a comparison result between the current hash value and a pre-stored standard hash value returned by the cryptographic acceleration card, wherein the standard hash value corresponds to a pre-defined standard disk image.

In an embodiment, the above-mentioned standard hash value is generated by a provider of the standard disk image (referred to as provider for short) by computing the standard disk image provided by the provider in a trusted execution environment. For example, before providing the standard disk image, the provider can compute the standard hash value of the standard disk image in the Trusted Execution Environment (TEE), and then encrypt and send the above-mentioned standard hash value to the cryptographic acceleration card for encrypted storage. The TEE in which the above-mentioned provider computes the standard hash value can be constructed by adopting any technique of related technologies and any hash algorithm of related technologies can be adopted for computing the standard hash value, which is not limited herein. It should be noted that a hash algorithm adopted by the blockchain integrated station to compute the current hash value of the disk image should be identical to a hash algorithm adopted by the provider to compute the standard hash value of the standard disk image. In this way, it is ensured that a definite comparison result between the current hash value and the standard hash value will be obtained.

In an embodiment, the provider can encrypt the above-mentioned standard hash value using its own provider private key and then send the standard hash value to the cryptographic acceleration card assembled on the blockchain integrated station, and the cryptographic acceleration card can decrypt the above-mentioned standard hash value in its own TEE using a provider public key of the provider and store the standard hash value in its own TEE; or, the provider can also sign the above-mentioned standard hash value using its provider public key, and then send the standard hash value and a signature to the cryptographic acceleration card in an associated manner, so that the cryptographic acceleration card verifies the above-mentioned signature using the provider public key of the provider and stores the standard hash value in a corresponding storage space in a case of successful verification. In a case that there are a plurality of disk images in the blockchain integrated station, the cryptographic acceleration card can establish an association relationship between a standard hash value corresponding to any disk image and a file identifier of the disk image, and store the standard hash values according to respective association relationships, so as to specifically determine a standard hash value corresponding to a disk image.

Further, when the cryptographic acceleration card is a cryptographic card based on FPGA chip, the received standard hash value can be programmed to be deployed in the FPGA chip. But, due to volatility of the FPGA chip, the stored standard hash value will be lost upon power down, so that the cryptographic acceleration card needs to acquire and store the standard hash value again after power up. To reduce the number of programming times of a client device, the FPGA structure can further include a memory connected with the FPGA chip, so that the standard hash value is deployed in the memory and the FPGA chip can read the standard hash value from the memory to realize relevant functions. Due to non-volatility of the memory, the memory can still store the standard hash value even upon power down, and the cryptographic acceleration card only needs to re-read the standard hash value from the memory to the FPGA chip after power up, without re-acquiring or re-programming. The above-mentioned memory can be in several forms, for example, can be a re-writable non-volatile memory such as flash memory, or can be a non-rewritable memory such as fuse memory, which will not be limited herein.

At step 106, in response to that the comparison result indicates that the current hash value is identical to the standard hash value, the blockchain integrated station executes the locally-deployed disk image to form a blockchain node.

In this embodiment, if the comparison result indicates that the current hash value and the standard hash value are same, it indicates that the disk image locally deployed on the blockchain integrated station is a disk image provided by the provider, which is un-tampered and successfully deployed and thus the disk image is trusted. In this case, the blockchain integrated station can execute the disk image to form a blockchain node. On the contrary, if the comparison result indicates that the current hash value and the standard hash value are different, it indicates that the disk image locally deployed on the blockchain integrated station is not the standard disk image provided by the provider but may be an illegally-tampered disk image or an erroneously deployed disk image and thus the disk image is not trusted. At this time, the blockchain integrated station can refuse to execute the disk image.

In an embodiment, when the comparison result indicates that the current hash value and the standard hash value are different, the disk image locally deployed on the blockchain integrated station is not the standard disk image provided by the provider. As a result, the blockchain integrated station can terminate the startup process of the blockchain integrated station, thereby avoiding executing a disk image different from the standard disk image. In another embodiment, the blockchain integrated station can also send a warning message for the disk image to at least one of a management personnel, a management device of the blockchain integrated station (for example, a control host for controlling a plurality of blockchain integrated stations at the same time), and a security service relating to the blockchain integrated station and the like, so that the management personnel, the management device or the security service performs corresponding processing for the disk image. Furthermore, the blockchain integrated station can also perform illegality detection for the disk image with a detection result included in the above-mentioned warning message, so that specific processing can be performed for the disk image. The above-mentioned response processing can include at least one of recording warning message, recording detection result of disk image and deleting disk image and the like.

In an embodiment, further continued from the embodiment in which the above-mentioned standard hash value is generated by the provider by computing the standard disk image provided by the provider in a trusted execution environment, in a case that the comparison result indicates that the current hash value and the standard hash value are different, the blockchain integrated station can request to acquire a standard disk image from the provider, and replace the current disk image with the acquired standard disk image, thus ensuring the disk image deployed in the blockchain integrated station is consistent with the standard disk image. Furthermore, when requesting to acquire the standard disk image from the provider, the blockchain integrated station can also request to acquire the standard hash value of the standard disk image at the same time, or request to acquire the standard hash value of the standard disk image from the provider after the standard disk image acquired from the provider passes trusted verification, thus ensuring the standard hash value corresponds to the standard disk image.

In an embodiment, when the comparison result indicates that the current hash value is identical to the standard hash value, the disk image corresponding to the current hash value is a trusted standard disk image. Thus, the blockchain integrated station can write the disk image corresponding to the current hash value (i.e. the above-mentioned trusted standard disk image) into the TEE locally deployed in the blockchain integrated station as a backup disk image the first time it received the comparison result indicating the current hash value and the standard hash value are same. Afterwards, in a case that a comparison result indicates that the current hash value and the standard hash value are different, the blockchain integrated station can read the backup disk image from the TEE, and then replace the disk image corresponding the current hash value with the backup disk image and respond to the above-mentioned startup instruction again. A standard disk image is acquired and backed up in the TEE, so that the current disk image is replaced with the standard disk image in a case that the current disk image is different from the standard disk image. In this way, it is guaranteed that the disk image locally deployed on the blockchain integrated station is consistent with the standard disk image. Further, and by using pre-stored and trusted standard disk image to replace deployed (but not trusted) disk image avoids possible increase of network load caused by re-acquiring a standard disk image from the provider every time that the comparison result indicates that the current hash value and the standard hash value are different.

Correspondingly, FIG. 2 is a flowchart of another trusted startup method of a blockchain integrated station according to example embodiments of the present disclosure. The method is applied to a cryptographic acceleration card. As shown in FIG. 2, the method can include the following steps.

At step 202, the cryptographic acceleration card assembled on the blockchain integrated station receives the current hash value sent from the blockchain integrated station, where the current hash value is obtained by the blockchain integrated station by computing the locally-deployed disk image in response to receiving a startup instruction.

In this embodiment, a disk image (that has not been executed yet) is locally pre-deployed on the blockchain integrated station. The specific form of the disk image is not limited herein in the present disclosure. For example, the disk image can be an executable disk image, for example, an executable file of .exe format. At this time, the executable file can be pre-installed in an execution component of the blockchain integrated station, such as a hard disk drive. The disk image can also be a binary disk image, for example, a binary file of .bin format. At this time, the binary file can be pre-stored at a proper position of an execution component of the blockchain integrated station, such as a hard disk drive to be invoked and executed. Further, the disk image can be a binary disk image corresponding to a blockchain node and deployed on the blockchain integrated station. Correspondingly, when the binary disk image is executed, the blockchain integrated station is implemented as a blockchain node, for example, realize one or more functions of blockchain visualization, contract creation and deployment, contract execution, key management and privacy computing and the like. The disk image can also be a platform disk image including the above-mentioned binary disk image corresponding to the blockchain node and deployed on the blockchain integrated station. When the platform disk image is executed, the blockchain integrated station is implemented not only as a blockchain node, but also can realize one or more functions such as file processing, node monitoring and service monitoring, which will not be redundantly described herein.

In an embodiment, the above-mentioned startup instruction can be in several forms which are not limited herein. For example, the above-mentioned startup instruction can be a machine startup instruction sent when a user (for example, a user of the blockchain integrated station) performs a machine startup operation for the blockchain integrated station; or a file execution instruction sent by a management device for the above-mentioned binary disk image in the blockchain integrated station under the startup state of the blockchain integrated station or the like.

At step 204, the cryptographic acceleration card compares the current hash value and a pre-stored standard hash value, and returns a comparison result to the blockchain integrated station, such that the blockchain integrated station executes the disk image to form a blockchain node in response to that the comparison result indicates that the current hash value is identical to the standard hash value.

In an embodiment, the above-mentioned standard hash value is generated by the provider by computing the standard disk image provided by the provider in a trusted execution environment. For example, before providing the standard disk image, the provider can compute the standard hash value of the standard disk image in the Trusted Execution Environment (TEE), and then encrypt and send the above-mentioned standard hash value to the cryptographic acceleration card for encrypted storage. The TEE in which the above-mentioned provider computes the standard hash value can be constructed by adopting any technique of related technologies and any hash algorithm of related technologies can be adopted for computing the standard hash value, which is not limited herein. It should be noted that a hash algorithm adopted by the blockchain integrated station to compute the current hash value of the disk image should be identical to a hash algorithm adopted by the provider to compute the standard hash value of the standard disk image. In this way, it is ensured that a definite comparison result between the current hash value and the standard hash value will be obtained.

In the above-mentioned embodiments of the present disclosure, after the blockchain integrated station receives the startup instruction, the cryptographic acceleration card compares the current hash value of the deployed current disk image computed by the blockchain integrated station with the standard hash value corresponding to the standard disk image pre-stored in the cryptographic acceleration card and determines whether the current hash value is identical to the standard hash value, and the blockchain integrated station executes the disk image in response to that the currently deployed disk image is further determined as the standard disk image, thereby realizing startup of the blockchain integrated station. As a result, by hash value comparison, it is guaranteed that the executed disk image is the same as the standard disk image. Thus, the trusted execution of the disk image is ensured, thus ensuring the trusted startup of the blockchain integrated station.

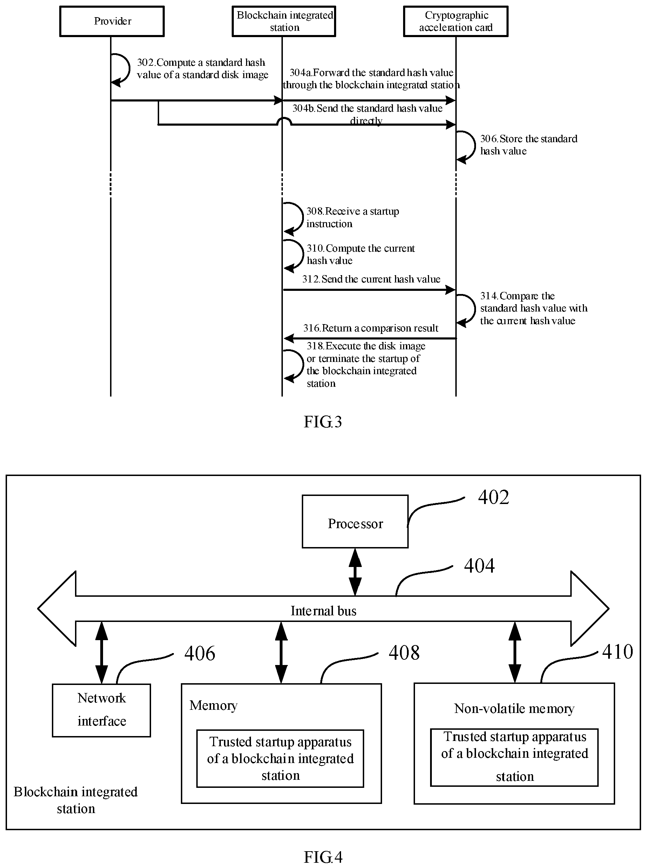

In combination with the interaction flowchart of the trusted startup method of the blockchain integrated station shown in FIG. 3, a process in which a trusted startup of a blockchain integrated station is realized through cooperation among a provider of standard disk image, a blockchain integrated station and a cryptographic acceleration card will be detailed below. As shown in FIG. 3, the process can include the following steps.

At step 302, the provider of the standard disk image computes the standard hash value of the standard disk image.

In an embodiment, the disk image provided by the provider can be an executable disk image, for example, an executable file of .exe format, or a binary disk image, for example, an executable file of .bin format. Furthermore, when the disk image is a binary disk image, the disk image can be a binary disk image corresponding to a blockchain node and deployed on the blockchain integrated station, and the blockchain integrated station executing the binary disk image can be implemented as a blockchain node; or, the disk image can also be a platform disk image including the above-mentioned binary disk image corresponding to the blockchain node and deployed on the blockchain integrated station, and the blockchain integrated station executing the platform disk image is not only be implemented as a blockchain node but also can realize other functions as above, which will not be repeated herein.

In an embodiment, for a standard disk image provided (or not provided yet) by the provider, the provider can compute a corresponding standard hash value in the TEE. The TEE can be constructed based on Intel Software Guard Extensions (SGX) or AMD TrustZone technique. The TEE can be deployed locally in the provider such that the provider can directly compute the standard hash value in the TEE; or, the TEE can be deployed in another component relating to the provider such that the provider can control the standard hash value to be encrypted and transmitted to the cryptographic acceleration card after computing the standard hash value in the TEE. In addition, when the above-mentioned file digest is a hash value of the disk image, the provider can compute the hash value by adopting a hash algorithm such as SHA algorithm, MD4 algorithm, MD5 algorithm, ETHASH algorithm, and SCRYPT algorithm. Reference can be made to the contents of related technologies for the specific process of the TEE construction and the specific process of the hash value computation, and redundant descriptions will not be made herein.

After obtaining the standard hash value, the provider can encrypt and transmit the standard hash value to the cryptographic acceleration card. Because the cryptographic acceleration card is assembled in the blockchain integrated station, the provider can forward the standard hash value to the cryptographic acceleration card through the blockchain integrated station (corresponding to the step 304a), or can directly send the standard hash value to the cryptographic acceleration card (corresponding to step 304b).

At step 304a, the standard hash value is forwarded to the cryptographic acceleration card through the blockchain integrated station.

The provider can encrypt the computed standard hash value in the TEE and then send the encrypted standard hash value to the blockchain integrated station. The blockchain integrated station can forward the standard hash value in ciphertext state to the cryptographic acceleration card after receiving the standard hash value.

At step 304b, the provider directly sends the standard hash value to the cryptographic acceleration card.

The provider can encrypt the computed standard hash value in the TEE and then send the encrypted standard hash value directly to the cryptographic acceleration card.

In the above-mentioned step 304a and step 304b, the provider can encrypt the standard hash value in several manners. In an embodiment, the cryptographic acceleration card can pre-acquire a provider public key, for example, the provider public key can be disclosed or only maintained in the cryptographic acceleration card. At this time, the provider can encrypt the standard hash value using its own provider private key and correspondingly, the cryptographic acceleration card can decrypt the standard hash value in the TEE using the provider public key maintained by itself after receiving the standard hash value in ciphertext state so as to obtain the standard hash value in plaintext state. Thus, by decrypting the standard hash value in ciphertext state using the pre-maintained provider public key, the privacy of the standard hash value during transmission is guaranteed.

In another embodiment, a root-of-trust key (Attestation Key) can be pre-deployed in the cryptographic acceleration card. The root-of-trust key can be pre-built in the cryptographic acceleration card or the root-of-trust key can be deployed into the cryptographic acceleration card by a blockchain integrated station or another object in an offline secure environment. For example, when the cryptographic acceleration card is a cryptographic card based on FPGA chip, the root-of-trust key can be programmed into the FPGA chip. At this time, the cryptographic acceleration card can realize key negotiation with the provider through the root-of-trust key, and encrypts and transmits the above-mentioned standard hash value using a negotiated hash transmission key. However, due to volatility of the FPGA chip, the stored root-of-trust key will be lost upon power down, so that the cryptographic acceleration card needs to re-deploy the root-of-trust key after power up. To reduce the number of deployments of a client device, the FPGA structure can further include a memory connected with the FPGA chip, so that the root-of-trust key is deployed in the memory and the FPGA chip can read the root-of-trust key from the memory to realize relevant functions. Due to non-volatility of the memory, the memory can still store the root-of-trust key even upon power down, and the cryptographic acceleration card only needs to re-read the root-of-trust key from the memory to the FPGA chip after power up, without re-deploying. The above-mentioned memory can be in several forms, for example, can be a re-writable non-volatile memory such as flash memory, or can be a non-rewritable memory such as fuse memory, which will not be limited herein.

The above-mentioned root-of-trust key is an asymmetric key and a public key corresponding to the root-of-trust key is disclosed. In this case, even if the root-of-trust key is not deployed (pre-built, or deployed by another object) by the provider, the provider can still verify, by using the disclosed public key, a signature generated by the root-of-trust key. The provider and the cryptographic acceleration card can realize key negotiation using the root-of-trust key. If the negotiation is realized based on SM2 algorithm (or another algorithm), the provider and the cryptographic acceleration card need to perform at least one information interaction during the negotiation process: when sending negotiation information to the provider, the cryptographic acceleration card can sign the above-mentioned negotiation information using the above-mentioned root-of-trust key, so that the provider performs signature verification using the disclosed public key after receiving the signed negotiation information so as to determine the negotiation information is indeed sent by the cryptographic acceleration card and trust the negotiation information; when the signature verification is unsuccessful, the provider can choose not to trust the received negotiation information. Based on the above-mentioned process, the provider and the cryptographic acceleration card can complete key negotiation, so that the provider and the cryptographic acceleration card can respectively obtain the same hash transmission key. Next, the provider can encrypt the standard hash value based on the hash transmission key and correspondingly, the cryptographic acceleration card can obtain the standard hash value by decryption using the corresponding hash transmission key after receiving the standard hash.

Further, when the standard hash value is encrypted and transmitted using the hash transmission key determined in the above-mentioned key negotiation process, the provider and the cryptographic acceleration card can store the above-mentioned hash transmission key in their respective TEEs after occurrence of the first negotiation, so that the hash transmission key can be used in subsequent transmission of the standard hash value (for example, disk image update). Thus, the hash transmission key negotiated in one time can be used several times, thereby reducing the workload of the key negotiation and improving the usage efficiency of the key. When a same pair of hash transmission keys are used a plurality of times, the risk of leakage of the keys can be increased correspondingly. As a result, to avoid leakage of the keys, an upper limit number of usage times or a valid time length can be set for the negotiated hash transmission key. Key negotiation can also be performed temporarily every time the standard hash value is transmitted in a scenario with high security demands, and the negotiated hash transmission key is discarded after each use to ensure the hash transmission key is not leaked. In this embodiment, key negotiation is performed based on the pre-deployed root-of-trust key, which not only ensures the privacy of the standard hash value in transmission process but also reduces the possibility that the root-of-trust key of the cryptographic acceleration card is leaked, thereby improving the security of the cryptographic acceleration card.

At step 306, the cryptographic acceleration card locally stores the standard hash value.

In an embodiment, after obtaining the standard hash value by decryption, the cryptographic acceleration card can store the standard hash value in a secure key zone in the TEE in a plaintext form, so that the standard hash value can be directly invoked, thereby improving subsequent hash value comparison speed; or, as mentioned above, the cryptographic acceleration card can store the standard hash value in the FPGA chip or the memory connected with the FPGA chip, so as to ensure storage security of the standard hash value.

In another embodiment, the cryptographic acceleration card does not decrypt the standard hash value in ciphertext state after receiving the standard hash value but directly stores the standard hash value in the secure key zone of the TEE, the FGPA chip or the memory connected with the FPGA chip. Only when the standard hash value is invoked can the cryptographic acceleration card decrypt the standard hash value using a corresponding key, so as to avoid possible hash value leakage caused by earlier decryption of the standard hash value. Furthermore, the standard hash value in a ciphertext state can also be stored in a non-TEE storage space to reduce occupation of the standard hash value for the corresponding storage space of the TEE.

Thus, the pre-storage of the standard hash value corresponding to the standard disk image is completed. The blockchain integrated station can accept the startup instruction at any time after the step 306, that is, there is no limitation to a time interval between the step 306 and the step 308 in the present disclosure.

At step 308, the blockchain integrated station receives a startup instruction.

In an embodiment, the above-mentioned startup instruction can be in several forms which are not limited herein. For example, the above-mentioned startup instruction can be a machine startup instruction sent when a user (for example, a user of the blockchain integrated station) performs a machine startup operation for the blockchain integrated station; or a file execution instruction sent by a management device for the above-mentioned binary disk image in the blockchain integrated station under the startup state of the blockchain integrated station or the like.

At step 310, the blockchain integrated station computes the current hash value of the locally-deployed disk image.

At step 312, the blockchain integrated station provides the computed current hash value to the cryptographic acceleration card.

In an embodiment, the blockchain integrated station can compute the current hash value of the locally-deployed disk image after receiving the startup instruction, where a hash algorithm adopted in the local hash value computation process should be consistent with a hash algorithm adopted by the provider to compute the standard hash value based on the standard disk image, so as to ensure there is a definite comparison result between the current hash value and the standard hash value (in a case of inconsistency of the hash algorithms, comparison of hash values will be meaningless.). In view of this, when sending the standard hash value to the cryptographic acceleration card, the provider sends parameter information such as algorithm type adopted to compute the standard hash value at the same time. After completion of computation, the blockchain integrated station can directly send the current hash value to the cryptographic acceleration card in plaintext form.

At step 314, the cryptographic acceleration card compares the standard hash value with the current hash value.

At step 316, the cryptographic acceleration card returns a comparison result of hash values to the blockchain integrated station.

In an embodiment, the cryptographic acceleration card can store the received current hash value in the TEE in plaintext form and then compare the standard hash value and the current hash value which both are of plaintext in the TEE; or, the cryptographic acceleration card decrypts the standard hash value of ciphertext in the TEE and then compares the decrypted standard hash value with the current hash value of plaintext to obtain a corresponding comparison result.

The above-mentioned comparison can be performed in a full text bit-by-bit comparison manner, that is, the bits of the current hash value and the standard hash value are compared bit by bit along a predetermined direction: if the values of all bits of the current hash value are correspondingly equal to the values of all bits of the standard hash value, it is determined that the current hash value and the standard hash value are same; on the contrary, if the value of any bit of the current hash value is unequal to the value of the corresponding bit of the standard hash value, it is determined that the current hash value and the standard hash value are not same. After the comparison is completed, the cryptographic acceleration card can return the corresponding comparison result to the blockchain integrated station.

At step 318, the blockchain integrated station determines to execute the disk image or terminate the startup of the blockchain integrated station according to the comparison result.

The current hash value is obtained through computation according to the disk image locally deployed on the blockchain integrated station and the standard hash value is obtained through computation according to the standard disk image provided by the provider. In this case, if the comparison result indicates that the current hash value is identical to the standard hash value, it indicates that the locally-deployed disk image is the standard disk image provided by the provider and thus the disk image is trusted (the disk image is not tampered during transmission or deployment); on the contrary, if the comparison result indicates that the current hash value is different from the standard hash value, it indicates the locally-deployed disk image is not the standard disk image provided by the provider, that is, the disk image is not trusted(the disk image can be tampered during transmission or deployment). The blockchain integrated station can perform corresponding subsequent processing according to the comparison result.

In an embodiment, in response to that the comparison result indicates that the current hash value and the standard hash value are same, the blockchain integrated station can execute the above-mentioned disk image locally deployed, so as to realize startup of the blockchain integrated station. At this time, the locally-deployed disk image is a trusted standard disk image. Therefore, the disk image can be directly executed to realize the startup of the blockchain integrated station. Continued from the previously-mentioned embodiment, in a case that the disk image is a binary disk image corresponding to a blockchain node and deployed on the blockchain integrated station, the blockchain integrated station can be implemented as a blockchain node, for example, realize blockchain visualization, contract creation, deployment and execution, key management and/or privacy computing and so on when the binary disk image is executed; in a case that the disk image is a platform disk image including the above-mentioned binary disk image corresponding to a blockchain node and deployed on the blockchain integrated station, the blockchain integrated station is not only implemented as a blockchain node but also can realize other functions such as file processing, node monitoring and/or service monitoring other than blockchain function, which will not be repeated herein.

In an embodiment, further continued from the above-mentioned embodiment in which the standard hash value is generated by the provider of the standard disk image by computing the standard disk image in the TEE, in a case that the comparison result indicates that the current hash value and the standard hash value are different, the blockchain integrated station can request to acquire a standard disk image from the provider, and replace the current disk image with the acquired standard disk image to ensure the disk image deployed in the blockchain integrated station is consistent with the standard disk image. Furthermore, the blockchain integrated station can request to acquire the standard hash value of the standard disk image at the same time when requesting the standard disk image, or request to acquire the standard hash value of the standard disk image from the provider after the standard disk image acquired from the provider passes trusted verification, so as to ensure the standard hash value corresponds to the standard disk image.

In an embodiment, the blockchain integrated station can pre-store a disk image as a backup disk image in the locally-deployed TEE. Thus, in a case that a comparison result indicates that the current hash value and the standard hash value are different, the blockchain integrated station can read the backup disk image from the TEE, and then replace the locally-deployed disk image with the backup disk image and respond to the above-mentioned startup instruction again. In this way, it is ensured that the disk image locally deployed on the blockchain integrated station is consistent with the standard disk image. In this case, even if the locally-deployed disk image is not trusted, the trusted startup of the blockchain integrated station can still be realized. Therefore, in addition to ensuring that the disk image locally deployed on the blockchain integrated station is consistent with the standard disk image, and by using pre-stored and trusted standard disk image to replace deployed (but not trusted) disk image avoids possible increase of network load caused by re-acquiring a standard disk image from the provider every time that the comparison result indicates that the current hash value and the standard hash value are different.

Further, the blockchain integrated station can write the disk image corresponding to the current hash value (i.e. the above-mentioned trusted standard disk image) into the TEE locally deployed in the blockchain integrated station as a backup disk image the first time it received the comparison result indicating the current hash value and the standard hash value are same. Alternatively, the blockchain integrated station can also proactively request to acquire the standard disk image corresponding to the above-mentioned standard hash value from the provider before receiving the startup instruction. Alternatively, corresponding to the previously-mentioned embodiment, when the standard hash value is forwarded by the blockchain integrated station, the provider can also encrypt the standard disk image and then transmit the standard disk image and the standard hash value to the blockchain integrated station in an associated manner, so that the blockchain integrated station writes the standard disk image into the TEE locally deployed in the blockchain integrated station as a backup disk image.

In an embodiment, in a case that a comparison result indicates that the current hash value and the standard hash value are different, the disk image locally deployed on the blockchain integrated station is not the standard disk image provided by the provider. Thus, the blockchain integrated station can terminate the startup process of the blockchain integrated station to avoid executing a disk image different from the standard disk image.

In another embodiment, in a case that the comparison result indicates that the current hash value and the standard hash value are different, the blockchain integrated station can also send a warning for the currently-deployed disk image. For example, a warning in the form of sound, light, or visual popup window can be sent to a user so that the user can know the disk image is not a standard disk image. Further, an illegality detection can be performed for the disk image with a detection result displayed to the user, so that the user can know more detailed illegal information of the disk image and further perform specific corresponding processing. A warning message can also be sent to a management device of the blockchain integrated station (for example, a control host controlling a plurality of blockchain integrated stations) or a security service relating to the blockchain integrated station so that the management device or the security service can perform corresponding processing for the disk image. Similarly, an illegality detection can also be performed for the disk image with a detection result included in the above-mentioned warning message to specifically perform the above-mentioned corresponding processing. The above-mentioned response processing can include at least one of recording warning message, recording detection result of disk image, and deleting disk image and the like.

FIG. 4 is a structural schematic diagram of a blockchain integrated station according to example embodiments of the present disclosure. As shown in FIG. 4, from the hardware level, the device includes a processor 402, an internal bus 404, a network interface 406, a memory 408, and a non-volatile memory 410. Of course, the device can further include hardware needed for other services. The processor 402 reads corresponding computer programs from the non-volatile memory 410 to the memory 408 for running, so as to logically form a trusted startup apparatus of a blockchain integrated station. Of course, in addition to the software implementation, one or more embodiments of the present disclosure do not preclude other implementations, for example, logic device or a combination of software and hardware or the like. That is, the executing subject of the following processing is not limited to each logic unit and can also be hardware or logic device.

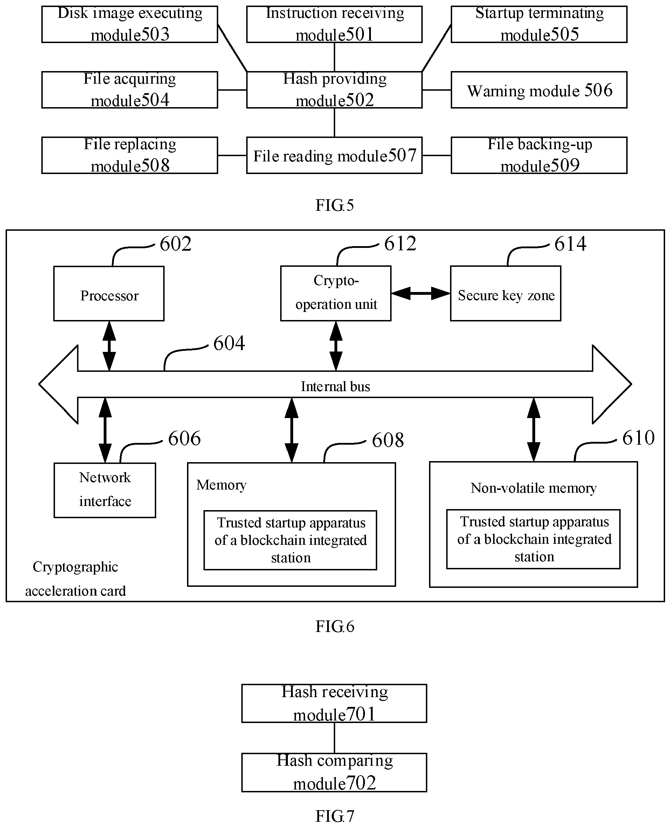

As shown in FIG. 5, in a software implementation, a trusted startup apparatus of a blockchain integrated station can include:
an instruction receiving module 501, configured to enable the blockchain integrated station to compute a current hash value of a locally-deployed disk image in response to receiving a startup instruction;
a hash providing module 502, configured to enable the blockchain integrated station to provide the current hash value to a cryptographic acceleration card assembled on the blockchain integrated station, and receive a comparison result between the current hash value and a pre-stored standard hash value returned by the cryptographic acceleration card, wherein the standard hash value corresponds to a predefined standard disk image; and
a disk image executing module 503, configured to enable the blockchain integrated station to execute the locally-deployed disk image to form a blockchain node in response to that the comparison result indicates that the current hash value is identical to the standard hash value.

Optionally, the locally-deployed disk image includes:
a binary disk image corresponding to the blockchain node and deployed on the blockchain integrated station; or,
a platform disk image deployed on the blockchain integrated station, wherein the platform disk image includes the binary disk image.

Optionally, the standard hash value is generated by a provider of the standard disk image by computing the standard disk image provided by the provider in a trusted execution environment.

Optionally, the apparatus further includes:
a file acquiring module 504, configured to enable the blockchain integrated station to request to acquire the standard disk image from the provider in response to that the comparison result indicates that the current hash value and the standard hash value are different.

Optionally, the apparatus further includes:
a startup terminating module 505, configured to enable the blockchain integrated station to terminate the startup process of the blockchain integrated station in response to that the comparison result indicates that the current hash value and the standard hash value are different; and/or,
a warning module 506, configured to enable the blockchain integrated station to send a warning for the disk image in response to that the comparison result indicates that the current hash value and the standard hash value are different.

Optionally, the apparatus further includes:
a file reading module 507, configured to enable the blockchain integrated station to read the backup disk image from the trusted execution environment locally deployed in response to that the comparison result indicates that the current hash value and the standard hash value are different; and
a file replacing module 508, configured to enable the blockchain integrated station to replace the disk image with the backup disk image and respond to the startup instruction again.

Optionally, the apparatus further includes:
a file backing-up module 509, configured to enable the blockchain integrated station to, the first time it received the comparison result indicating that the current hash value is identical to the standard hash value, write the disk image corresponding to the current hash value into the trusted execution environment locally deployed in the blockchain integrated station as the backup disk image.

FIG. 6 is a structural schematic diagram of a cryptographic acceleration card according to example embodiments of the present disclosure. As shown in FIG. 6, from the hardware level, the device includes a processor 602, an internal bus 604, a network interface 606, a memory 608, a non-volatile memory 610, a crypto-operation unit 612 and a secure key zone 614. Of course, the device can further include hardware needed for other services. The crypto-operation unit 612 stores received or generated relevant keys in the secure key zone 614 so that the processor 602 invokes the keys to realize relevant functions such as encryption, decryption, signature and/or signature verification. The processor 602 reads corresponding computer programs from the non-volatile memory 610 to the memory 608 for running, so as to logically form a trusted startup apparatus of a blockchain integrated station. Of course, in addition to the software implementation, one or more embodiments of the present disclosure do not preclude other implementations, for example, logic device or a combination of software and hardware or the like. That is, the executing subject of the following processing is not limited to each logic unit and can also be hardware or logic device.

As shown in FIG. 7, in a software implementation, a trusted startup apparatus of a blockchain integrated station can include:
a hash receiving module 701, configured to enable a cryptographic acceleration card assembled on the blockchain integrated station to receive a current hash value sent from the blockchain integrated station, wherein the current hash value is obtained by the blockchain integrated station by computing a locally-deployed disk image in response to receiving a startup instruction; and the cryptographic acceleration card pre-stores a standard hash value corresponding to a pre-defined standard disk image; and
a hash comparing module 702, configured to enable the cryptographic acceleration card to compare the current hash value and the standard hash value and return a comparison result to the blockchain integrated station, such that the blockchain integrated station executes the locally-deployed disk image to form a blockchain node in response to that the comparison result indicates that the current hash value is identical to the standard hash value.

Optionally, the locally-deployed disk image includes:
a binary disk image corresponding to the blockchain node and deployed on the blockchain integrated station; or,
a platform disk image deployed on the blockchain integrated station, wherein the platform disk image includes the binary disk image.

Optionally, the standard hash value is generated by a provider of the standard disk image by computing the standard disk image provided by the provider in a trusted execution environment.

The systems, apparatuses, modules or units described in the above-mentioned embodiments can be specifically implemented by a computer chip or an entity or can be implemented by a product with a particular function. A typical implementing device can be a computer and the computer can specifically be a personal computer, a laptop computer, a cellular phone, a camera phone, a smart phone, a personal digital assistant, a media player, a navigation device, an email transceiver, a game console, a tablet computer, a wearable device, or a combination of any several devices of the above-mentioned devices.

In a typical configuration, the computer can include one or more central processing units (CPU), one or more input/output interfaces, one or more network interfaces and one or more memories.

The memory can include a non-permanent memory, a random access memory (RAM), and/or a non-volatile memory and the like in a computer readable medium, for example, read only memory (ROM), or flash RAM. The memory is one example of the computer readable medium.

The computer readable medium includes permanent, non-permanent, mobile and non-mobile media, which can realize information storage by any method or technology. The information can be computer readable instructions, data structures, program modules and other data. The examples of the computer storage medium include but not limited to: a phase change random access memory (PRAM), a Static Random Access Memory (SRAM), a Dynamic Random Access Memory (DRAM), and other types of RAMs, Read-Only Memory (ROM), an Electrically-Erasable Programmable Read-Only Memory (EEPROM), a Flash Memory, or other memory technology, CD-ROM, digital versatile disc (DVD) or other optical storage, cassette type magnetic tape, magnetic disk storage, quantum memory, storage medium based on graphene, or other magnetic storage device or other non-transmission medium for storing information accessible by computing devices. According to the definition of the specification, the computer readable medium does not include transitory computer readable media, for example, modulated data signal and carriers.

It should be noted that the term "including", "containing" or any variation thereof is intended to encompass non-exclusive inclusion, so that a process, method, product or device including a series of elements includes not only those elements but also other elements not listed explicitly or those elements inherent to such a process, method, product or device. Without more limitations, an element defined by the statement "including a..." shall not be precluded to include additional same elements in a process, method, product or device including the elements.

The specific embodiments are described as above. Other embodiments are within the scope of the appended claims. In some cases, the actions or steps recorded in the claims can be performed in a sequence different from the embodiments to achieve the desired result. Further, the processes shown in drawings do not necessarily require a particular sequence or a continuous sequence shown to achieve the desired result. In some implementations, a multi-task processing and parallel processing is possible and can also be advantageous.

The terms used in one or more embodiments of the present disclosure are for the purpose of describing particular embodiments only, and are not intended to limit the one or more embodiments of the present disclosure. Terms "a", "the" and "said" used in their singular forms in one or more embodiments of the present disclosure and the appended claims are also intended to include plurality, unless clearly indicated otherwise in the context. It should also be understood that the term "and/or" as used herein refers to and includes any and all possible combinations of one or more of the associated listed items.

It should be understood that, although the terms "first," "second," "third," and the like can be used in one or more embodiments of the present disclosure to describe various information, such information should not be limited to these terms. These terms are only used to distinguish one category of information from another. For example, without departing from the scope of one or more embodiments of the present disclosure, first information can be referred as second information; and similarly, the second information can also be referred as the first information. Depending on the context, the term "if' as used herein can be interpreted as "when" or "upon" or "in response to determining".

## Claims

1. A trusted startup method of a blockchain integrated station, comprising:
in response to receiving (308) a startup instruction by a blockchain integrated station comprising at least one processor and a cryptographic acceleration card, computing (310), by the blockchain integrated station, a current hash value of a locally-deployed disk image deployed on the blockchain integrated station, wherein the locally-deployed disk image is an executable disk image, wherein when the disk image is executed, the blockchain integrated station is implemented as a blockchain node to realize one or more functions of the blockchain node;
providing (312), by the blockchain integrated station, the current hash value to the cryptographic acceleration card comprised in the blockchain integrated station, wherein at least part of operations relating to key management, encryption and decryption, and signature verification for the blockchain integrated station are offloaded from the at least one processor to the cryptographic acceleration card; and
receiving (316), by the blockchain integrated station and from the cryptographic acceleration card, a comparison result between the current hash value and a pre-stored standard hash value stored in the cryptographic acceleration card, wherein the standard hash value corresponds to a pre-defined standard disk image; and
in a case that the comparison result indicates that the current hash value is identical to the standard hash value stored in the cryptographic acceleration card, executing (318), by the blockchain integrated station, the locally-deployed disk image to form the blockchain node.

2. The method according to claim 1, wherein the locally-deployed disk image comprises:
a binary disk image corresponding to the blockchain node and deployed on the blockchain integrated station; or
a platform disk image deployed on the blockchain integrated station, wherein the platform disk image comprises the binary disk image.

3. The method according to claim 1, wherein the standard hash value is generated (302) by a provider of the standard disk image by computing the standard disk image provided by the provider in a trusted execution environment.

4. The method according to claim 3, further comprising:
in a case that the comparison result indicates that the current hash value is different from the standard hash value, requesting to acquire, by the blockchain integrated station, the standard disk image from the provider.

5. The method according to claim 1, wherein in a case that the comparison result indicates that the current hash value is different from the standard hash value, the method further comprises at least one of:
terminating, by the blockchain integrated station, a startup process of the blockchain integrated station; or,
sending, by the blockchain integrated station, a warning for the locally-deployed disk image.

6. The method according to claim 1, further comprising:
in a case that the comparison result indicates that the current hash value is different from the standard hash value, reading, by the blockchain integrated station, a backup disk image from a locally-deployed trusted execution environment;
replacing, by the blockchain integrated station, the locally-deployed disk image with the backup disk image and responding to the startup instruction again.

7. The method according to claim 6, further comprising:
after receiving the comparison result indicating that the current hash value is identical to the standard hash value for a first time, writing, by the blockchain integrated station, the locally-deployed disk image corresponding to the current hash value into the trusted execution environment locally deployed in the blockchain integrated station as the backup disk image.

8. An apparatus, comprising:
at least one processor (402); and
a cryptographic acceleration card,
wherein the apparatus is configured to perform the method according to any one of the preceding claims.

9. A computer readable storage medium having computer instructions stored thereon, wherein the instructions are executed by a processor to implement steps of the method according to any one of claims 1-7.

## Patentansprüche

1. Vertrauenswürdiges Startverfahren einer integrierten Blockchain-Station, umfassend:
als Reaktion auf das Empfangen (308) einer Startanweisung durch eine integrierte Blockchain-Station, die mindestens einen Prozessor und eine kryptographische Beschleunigungskarte umfasst, Berechnen (310), durch die integrierte Blockchain-Station, eines aktuellen Hash-Werts eines lokal bereitgestellten Plattenbilds, das auf der integrierten Blockchain-Station bereitgestellt wird, wobei das lokal bereitgestellte Plattenbild ein ausführbares Plattenbild ist, wobei, wenn das Plattenbild ausgeführt wird, die integrierte Blockchain-Station als ein Blockchain-Knoten implementiert wird, um eine oder mehrere Funktionen des Blockchain-Knotens zu realisieren;
Bereitstellen (312), durch die integrierte Blockchain-Station, des aktuellen Hash-Werts an die kryptographische Beschleunigungskarte, die in der integrierten Blockchain-Station enthalten ist, wobei mindestens ein Teil von Operationen, die sich auf Schlüsselverwaltung, Verschlüsselung und Entschlüsselung und Signaturverifizierung für die integrierte Blockchain-Station beziehen, von dem mindestens einen Prozessor an die kryptographische Beschleunigungskarte ausgelagert wird; und
Empfangen (316), durch die integrierte Blockchain-Station und von der kryptographischen Beschleunigungskarte, eines Vergleichsergebnisses zwischen dem aktuellen Hash-Wert und einem vorgespeicherten Standard-Hash-Wert, der in der kryptographischen Beschleunigungskarte gespeichert ist, wobei der Standard-Hash-Wert einem vordefinierten Standard-Plattenbild entspricht; und
falls das Vergleichsergebnis angibt, dass der aktuelle Hash-Wert identisch mit dem Standard-Hash-Wert ist, der in der kryptographischen Beschleunigungskarte gespeichert ist, Ausführen (318), durch die integrierte Blockchain-Station, des lokal bereitgestellten Plattenbilds, um den Blockchain-Knoten zu bilden.

2. Verfahren nach Anspruch 1, wobei das lokal bereitgestellte Plattenbild umfasst:
ein binäres Plattenbild, das dem Blockchain-Knoten entspricht und auf der integrierten Blockchain-Station bereitgestellt wird; oder
ein Plattform-Plattenbild, das auf der integrierten Blockchain-Station bereitgestellt wird, wobei das Plattform-Plattenbild das binäre Plattenbild umfasst.

3. Verfahren nach Anspruch 1, wobei der Standard-Hashwert durch einen Anbieter des Standard-Plattenbilds durch Berechnen des Standard-Plattenbilds, das durch den Anbieter in einer vertrauenswürdigen Ausführungsumgebung bereitgestellt wird, erzeugt wird (302).

4. Verfahren nach Anspruch 3, ferner umfassend:
falls das Vergleichsergebnis angibt, dass sich der aktuelle Hash-Wert von dem Standard-Hash-Wert unterscheidet, Anfordern, dass das Standard-Plattenbilds durch die integrierte Blockchain-Station von dem Anbieter erfasst wird.

5. Verfahren nach Anspruch 1, wobei, falls das Vergleichsergebnis angibt, dass sich der aktuelle Hash-Wert von dem Standard-Hash-Wert unterscheidet, das Verfahren ferner mindestens eines umfasst von:
Beenden, durch die integrierte Blockchain-Station, eines Startprozesses der integrierten Blockchain-Station; oder
Senden, durch die integrierte Blockchain-Station, einer Warnung für das lokal bereitgestellte Plattenbild.

6. Verfahren nach Anspruch 1, ferner umfassend:
falls das Vergleichsergebnis angibt, dass sich der aktuelle Hash-Wert von dem Standard-Hash-Wert unterscheidet, Lesen, durch die integrierte Blockchain-Station, eines Sicherungs-Plattenbilds aus einer lokal bereitgestellten vertrauenswürdigen Ausführungsumgebung;
Ersetzen, durch die integrierte Blockchain-Station, des lokal bereitgestellten Plattenbilds durch das Sicherungs-Plattenbild und erneutes Antworten auf die Startanweisung.

7. Verfahren nach Anspruch 6, ferner umfassend:
nach dem Empfangen des Vergleichsergebnisses, das angibt, dass der aktuelle Hash-Wert mit dem Standard-Hash-Wert zum ersten Mal identisch ist, Schreiben, durch die integrierte Blockchain-Station, des lokal bereitgestellten Plattenbilds, das dem aktuellen Hash-Wert entspricht, in die vertrauenswürdige Ausführungsumgebung, die lokal in der integrierten Blockchain-Station bereitgestellt wird, als das Sicherungs-Plattenbild.

8. Vorrichtung, umfassend:
mindestens einen Prozessor (402); und
eine kryptographische Beschleunigungskarte,
wobei die Vorrichtung eingerichtet ist, das Verfahren nach einem der vorhergehenden Ansprüche durchzuführen.

9. Computerlesbares Speichermedium mit darauf gespeicherten Computeranweisungen, wobei die Anweisungen durch einen Prozessor ausgeführt werden, um Schritte des Verfahrens nach einem der Ansprüche 1-7 zu implementieren.

## Revendications

1. Procédé de démarrage sécurisé d'une station intégrée de chaîne de blocs, comprenant :
en réponse à la réception (308) d'une instruction de démarrage par une station intégrée de chaîne de blocs comprenant au moins un processeur et une carte d'accélération cryptographique, le calcul (310), par la station intégrée de chaîne de blocs, d'une valeur de hachage actuelle d'une image de disque déployée localement déployée sur la station intégrée de chaîne de blocs, dans lequel l'image de disque déployée localement est une image de disque exécutable, dans lequel lorsque l'image de disque est exécutée, la station intégrée de chaîne de blocs est établie comme un noeud de chaîne de blocs pour réaliser une ou plusieurs fonctions du noeud de chaîne de blocs ;
la fourniture (312), par la station intégrée de chaîne de blocs, de la valeur de hachage actuelle à la carte d'accélération cryptographique comprise dans la station intégrée de chaîne de blocs, dans lequel au moins une partie des opérations relatives à la gestion de clé, au chiffrement et au déchiffrement, et à la vérification de signature pour la station intégrée de chaîne de blocs sont déchargées de l'au moins un processeur à la carte d'accélération cryptographique ; et
la réception (316), par la station intégrée de chaîne de blocs et de la carte d'accélération cryptographique, d'un résultat de comparaison entre la valeur de hachage actuelle et une valeur de hachage standard pré-stockée stockée dans la carte d'accélération cryptographique, dans lequel la valeur de hachage standard correspond à une image de disque standard prédéfinie ; et
dans un cas où le résultat de comparaison indique que la valeur de hachage actuelle est identique à la valeur de hachage standard stockée dans la carte d'accélération cryptographique, l'exécution (318), par la station intégrée de chaîne de blocs, de l'image de disque déployée localement pour former le noeud de chaîne de blocs.

2. Procédé selon la revendication 1, dans lequel l'image de disque déployée localement comprend :
une image de disque binaire correspondant au noeud de chaîne de blocs et déployée sur la station intégrée de chaîne de blocs ; ou
une image de disque de plateforme déployée sur la station intégrée de chaîne de blocs, dans lequel l'image de disque de plateforme comprend l'image de disque binaire.

3. Procédé selon la revendication 1, dans lequel la valeur de hachage standard est générée (302) par un fournisseur de l'image de disque standard en calculant l'image de disque standard fournie par le fournisseur dans un environnement d'exécution sécurisé.

4. Procédé selon la revendication 3, comprenant en outre :
dans un cas où le résultat de comparaison indique que la valeur de hachage actuelle est différente de la valeur de hachage standard, la demande d'acquisition, par la station intégrée de chaîne de blocs, de l'image de disque standard auprès du fournisseur.

5. Procédé selon la revendication 1, dans lequel dans un cas où le résultat de comparaison indique que la valeur de hachage actuelle est différente de la valeur de hachage standard, le procédé comprend en outre au moins l'un parmi :
la terminaison, par la station intégrée de chaîne de blocs, d'un processus de démarrage de la station intégrée de chaîne de blocs ; ou,
l'envoi, par la station intégrée de chaîne de blocs, d'un avertissement pour l'image de disque déployée localement.

6. Procédé selon la revendication 1, comprenant en outre :
dans un cas où le résultat de comparaison indique que la valeur de hachage actuelle est différente de la valeur de hachage standard, la lecture, par la station intégrée de chaîne de blocs, d'une image de disque de sauvegarde à partir d'un environnement d'exécution sécurisé déployé localement ;
le remplacement, par la station intégrée de chaîne de blocs, de l'image de disque déployée localement par l'image de disque de sauvegarde et la réponse renouvelée à l'instruction de démarrage.

7. Procédé selon la revendication 6, comprenant en outre :
après la réception du résultat de comparaison indiquant que la valeur de hachage actuelle est identique à la valeur de hachage standard pour une première fois, l'écriture, par la station intégrée de chaîne de blocs, de l'image de disque déployée localement correspondant à la valeur de hachage actuelle dans l'environnement d'exécution sécurisé déployé localement dans la station intégrée de chaîne de blocs en tant qu'image de disque de sauvegarde.

8. Appareil, comprenant :
au moins un processeur (402) ; et
une carte d'accélération cryptographique,
dans lequel l'appareil est configuré pour réaliser le procédé selon l'une quelconque des revendications précédentes.

9. Support de stockage lisible par ordinateur sur lequel sont stockées des instructions informatiques, dans lequel les instructions sont exécutées par un processeur pour mettre en oeuvre des étapes du procédé selon l'une quelconque des revendications 1 à 7.
